Europäisches Patentamt
European Patent Office
Office européen des brevets

(19)

(11) Publication number: **0 466 111 A1**

(12) # EUROPEAN PATENT APPLICATION

(21) Application number: **91111427.0**

(22) Date of filing: **09.07.91**

(51) Int. Cl.$^{5}$: **C08F 222/04**, C09D 135/00, C08L 35/00

(30) Priority: **09.07.90 DE 4021924**

(43) Date of publication of application: **15.01.92 Bulletin 92/03**

(84) Designated Contracting States: **FR GB IT NL**

(71) Applicant: **DAINIPPON INK AND CHEMICALS, INC.**
**35-58, Sakashita 3-chome**
**Itabashi-ku Tokyo(JP)**

(72) Inventor: **Grahe, Gerwald F., Dr.**
**Leichhardtstrasse 13**
**W-1000 Berlin 33(DE)**
Inventor: **Frings, Rainer B., Dr.**
**Sedanstrasse 9**
**W-1000 Berlin 41(DE)**

(74) Representative: **Nöth, Heinz, Dipl.-Phys. et al**
**Patentanwalt, Mozartstrasse 17**
**W-8000 München 2(DE)**

(54) **Polymer mixture, process for its manufacture and its use in coatings.**

(57) The polymer mixtures according to the invention consist of at least two components, of which at least one is a radically generated copolymer, containing dihydro-2.5-furanedione groups, whereas the other component or components have to contain hydroxyl and epoxy groups, which at elevated temperatures, and possibly under catalysis, reacts with the dihydro-2.5-furanedione groups of the first component, in a two-step addition reaction, forming ester groups, whereby e.g. in a coating a three-dimensional network can be built.

EP 0 466 111 A1

## Background of the invention

### Field of the invention

The invention relates to polymer mixtures with dihydro-2.5-furanedione groups, processes for their manufacture and their use as coatings.

### Prior Art

It is known that the reaction of cyclic aliphatic anhydrides, with hydroxyl-group-containing compounds, occurs fast, at relatively low temperatures under formation of hemi-esters, while the reaction with epoxy groups needs high temperatures and catalysis. On the other hand carboxylic groups, as they are present in hemi-esters also, reacts fast again in an addition reaction with epoxy groups under formation of esters.

The reaction sequence described above, is utilized in the crosslinking of epoxy resins, usually on basis of bisphenol-A, the higher molecular products of which usually contains, besides terminal epoxy groups, also OH-groups attached to secondary carbon atoms. The sequence of addition steps described above, produces a dense three-dimensional network.

Thus crosslinked epoxy resin systems, their manufacture, their crosslinking mechanism, and their use are treated in numerous standard monographs, such as in H. Kittel, "Lehrbuch der Lacke und Beschichtungen", Bd I/Teil 2, S. 614-684, Verlag A. Colomb, Stuttgart-Berlin-Oberschwandorf 1973 and H. Lee and K. Neville, "Handbook of Epoxy Resins", Kap. 12-1, Mc Graw Hill, New York 1967.

The anhydride/epoxy-crosslinking is used as a so called "hotcuring", for e.g. electroinsulating coatings, powder coatings, casting resins and composite materials Especially maleic anhydride, (methyl-)phtalic anhydride, tri- and pyromellitic anhydride, and with less importance nadic anhydride, dodecenylsuccinic anhydride, 3.3'- 4.4'-benzophenonedianhydride or the adduct of maleic anhydride with methyltetrahydrophtalic anhydride (Epiclon B 4400, Dainippon Ink & Chemicals, Inc., Tokyo), are used as anhydride components.

The addition of cyclic anhydrides, to epoxy resins, in any case needs the catalysis by suitable additives, e.g. tertiary amines or their salts, imidazoles or organic phosphoric compounds, and it requires crosslinking temperatures between 150 and 300 °C.

But the "hot-curing" of epoxy resins, with the cyclic anhydrides mentioned above has, beside the high crosslinking temperatures which prevent e.g. the coating, or embedding of temperature-sensitive objects, a number of other disadvantages which restrict the general use of this reaction:

a) Many of the anhydrides mentioned above have a tendency for sublimation at crosslinking temperatures,

b) only mono- and dianhydrides are commercially available, so that for the complete crosslinking of the epoxy large amount of anhydrides are necessary,

c) the melting points of many anhydrides are above 200 °C, so that at the beginning of the crosslinking reaction, they are not yet completely molten,

d) especially the aromatic dianhydrides, are often hardly soluble in suitable coating solvents, and in lower or higher molecular epoxy compounds,

e) above all, because the aromatic dianhydrides are hard and brittle, often additives for increasing flexibility, such as elastomers or thermoplastics with a lower glass transition temperature, or reactive diluents have to be added.

The essential advantages of the anhydride-epoxy-crosslinking, is the addition reaction without formation of reaction byproducts, such as water, short-chain aliphatic alcohols, phenol or ketones. The relatively low toxicity, of the anhydrides as well as the epoxy resins, the dense crosslinking as one anhydride group forms two crosslinking sites, and the very high thermal and chemical stability have caused attempts, to reduce or completely remove its disadvantages by modification of the anhydride component, or by incorporation of anhydride groups into polymers.

Thus, in EP-PS O 002 718 the synthesis of a trimellitic ester mixture, from trimellitic anhydride and aliphatic diols, such as 1,2-ethyleneglycol or hexane-diol-1,6 is described. It contains beside free carboxylic groups also anhydride groups, and is used together with epoxy resins, for the interior coating of food or beverage cans, made from tinplate steel, aluminium or TFS (tin free steel). By incorporation of flexible alkylene groups, the solubility of these anhydrides in glycoletheracetates is essentially improved, and the flexibility of the crosslinked coating film is raised. The anhydride epoxy crosslinking is especially interesting for the mentioned use. High chemical stability and a very good adhesion are required. No reaction products such as short-chain alcohols or formaldehyde are split off during crosslinking or thereafter, which in case of

the common used epoxyacrylate/butoxylated-melamine coatings can cause the so called "solvent-retention".

Further, the possibility exist to incorporate anhydride groups into polymers, whereby some of the disadvantages mentioned above, such as e.g. the sublimation tendency and possibly the low solubility, can be eliminated.

In GB-PS 1 255 838, 1:2 copolymers from 4-vinylcyclohexene and maleic anhydride, and in GB-PS 1 015 215, 1:1 copolymers from cis,cis-1.5-cyclooctadiene and maleic anhydride are described. Further, copolymers of maleic (E.W. Ducke et al. Polymer, 9, bicyclic 1.5- and 1.6-dienes, such as e.g. with dicyclohexenylether (K. Meyersen and J.Y.C. Polymer Science, Part A 1, 5, S. 1845-53, 1967), dicyclopentene and Wang, Journal of are known.

Such polymers are usually not soluble in the common coating solvents, they have also similar high melting- or softening-points as the low molecular aromatic anhydrides. Because of the polymerization mechanism of the cyclopolymerization, the polymer chains consists of annellated rings, and are therefor especially stiff and unsuitable for a raise of the flexibility of coatings.

The unsaturated anhydrides methacrylic anhydride, maleic anhydride and dihydro-3-methylene-2.5-furanedione, can be copolymerized with many unsaturated vinyl, acrylate or metharylate monomers, forming linear polymer chains, whereby also an anhydride group containing polymers are obtained.

Methacrylic anhydride seems unsuitable as a polymerizable anhydride component, however, since it copolymerizes in polar solvents, with various vinyl, acrylate or methacrylate monomers, under formation of six-membered anhydride rings statistically distributed in the polymer chain, while these copolymers are insoluble.

Maleic anhydride forms strictly alternating copolymers with several vinyl monomers, such as styrene and alkylvinylethers, as described in common text books of macromolecular chemistry, such as e.g. F. Runge, E. Taeger Einfuhrung in die Chemie und Technologie der Kunststoffe", S. 127, 521, Akademie Verlag, Berlin 1976). It is not possible to prepare polymers with variable anhydride contents and such polymers are bad filmforming substances. The copolymerization of styrene with maleic anhydride and other acrylate or methacrylate comonomers, in which these together with styrene are present in excess, is possible but leads to polymer chains which, statistically distributed, show shorter and longer alternating styrene/maleic anhydride sequences. Such polymers and their use as epoxy hardeners are described e.g. in EP-AS O 225 097 and in JP 82/87 408.

Dihydro-3-methylene-2.5-furanedione forms copolymers with vinyl and acrylate or methacrylate comonomers, in which a more even distribution of the anhydride groups along the polymer chain is to be expected as the copolymerization parameters $r_1$ and $r_2$, especially their product $r_Ir_2$, according to M.M. Sharabash and R.L. Guile, Journal of Macromolecular Science, Chem., A 10, S. 10391054, 1976, say something against an alternating copolymerization. It is possible to adapt better to the content of the anhydride groups in the polymer, their distribution along the Polymer chains and also the comonomer composition to the respective requirements. An even distribution of the anhydride groups is also favourable for the chemical and thermal stability of the crosslinked products, such as e.g. coatings.

Contrary to other anhydrides, the two carboxylic groups which form the dihydro-2.5-furanedione ring are chemically not equivalent. One group is attached to a primary and the other to a tertiary carbon atom which results in a different reactivity. The anhydride ring is cleaved by a hydroxyl-group-containing compound such as alcohols, higher molecular epoxy resins under formation of an ester group attached to the primary carbon atom, or a carboxylic group attached to the tertiary carbon atom. This first reaction step of the epoxy resin crosslinking should occur much faster and at lower temperatures than with maleic anhydride copolymers.

Coatings on the basis of dihydro-2.5-furanedione containing polymers and epoxy compounds are known. In EP-OS O 225 097, dissolved polymer mixtures consisting of acrylate copolymers which contain 25% by weight of dihydro-3-methylene-2.5-furanedione or 16% by weight of maleic anhydride and low molecular polyglycidylethers, especially sorbitol polyglycidylethers, are described which crosslink between ambient temperature and 200 °C, can be used for automotive coatings.

In JP 82/87408, polymer mixtures are described, one component which consists of an acrylate copolymer with 10% by weight dihydro-3-methylene-2.5-furanedione, maleic anhydride and additionally glycidyl groups beside unreactive $\alpha,\beta$-unsaturated carbonic esters, and crosslinks with 1% by weight, relative to the solid anhydride group containing polymer, of a polyesterpolyol with an OH-number of 170 mg KOH/g polymer at 180 °C.

The direct use of monomer, as described in EP-OS O 225 097, is economically and technically unfavourable, as this monomer is very expensive, not soluble in the common monomers and only hardly soluble in many hydroxyl-group-free solvents.

Summary of the invention

It is the purpose of the present invention, to prepare crosslinkable polymer mixtures in which the two components crosslinking with each other are present in comparable amounts. While the epoxy- and OH-group-containing components should be low-cost mass products and preferably polymers, the properties of acrylate copolymers can be combined with such of epoxy resins or other polymer kinds named below. The further purpose is to provide manufacturing processes for the polymer components which instead of the use of dihydro-3-methylene-2.5-furanedione start from 3-methylene-butanediacid-1.4.

The polymer mixtures according to the invention consist of at least two components, of which at least one is a radically generated copolymer, containing dihydro-2.5-furanedione groups, whereas the other component or components have to contain hydroxyl and epoxy groups, which at elevated temperatures, and possibly under catalysis, reacts with the dihydro-2.5-furanedione groups of the first component, in a two-step addition reaction, forming ester groups, whereby e.g. in a coating a three-dimensional network can be built.

The polymer mixtures according to the invention contains

a) copolymers, which have been manufactured from dihydro-3methylene-2.5-furanedione or the respective dicarbonic acid,

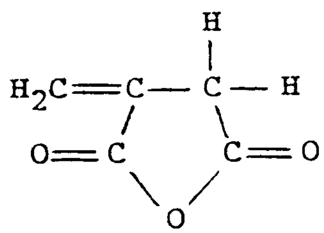

vinyl monomers, -esters of $\alpha,\beta$-unsaturated carboxylic acids with 1 to 18 carbon atoms in the alcohol residue, -$\alpha,\beta$-unsaturated carboxylic acids, -$\alpha,\beta$-unsatulated sulfonic acids -other polymerizable monomers with nitrile, dialkylamido or dialkylamino groups by radically initiated solvent polymerization and which contain at least two 3-substituted dihydro-2.5-furanedione groups and at least one carboxylic or sulfonic residue per macromolecule and

bl) higher molecular epoxy resins (epoxypolyether) on basis of bisphenol A, e.g.

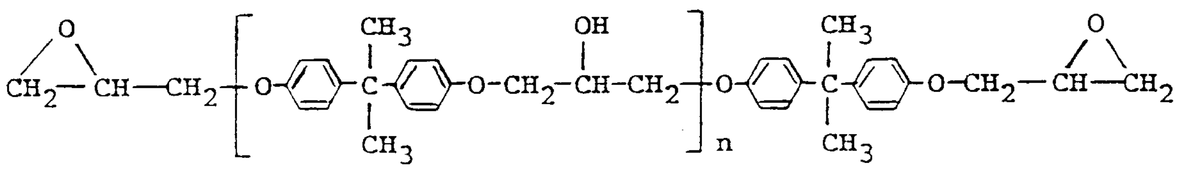

n = 0 - 10

or

b2) acrylate copolymers which have epoxy as well as hydroxy groups, for example

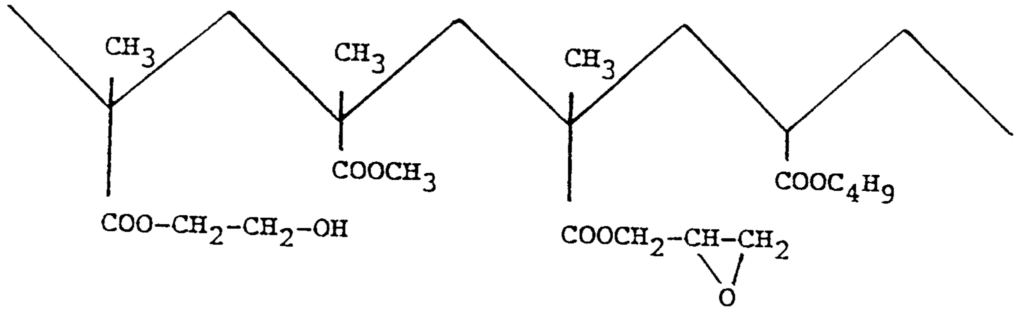

or

b3) phenol-formaldehyde novolaks, in which the phenolic OH-groups are partially etherified with glycidyl groups,

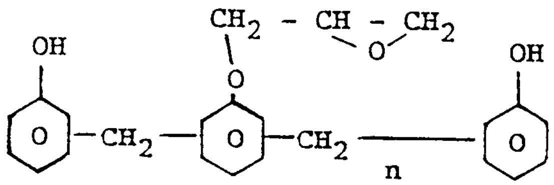

n = 2 - 10

or a mixture of

cl) OH-functional acrylate copolymers,

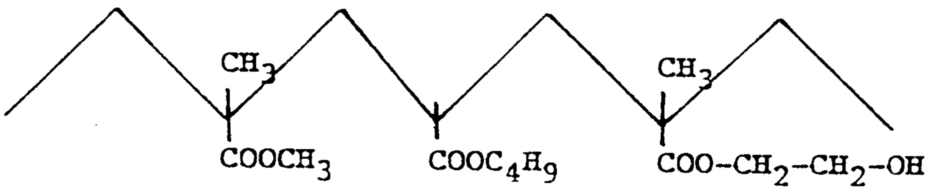

c2) OH-functional polyesters, such as e.g.

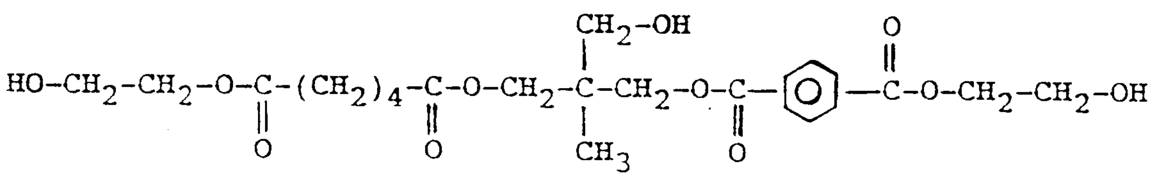

or

c3) phenol-formaldehyde novolaks,

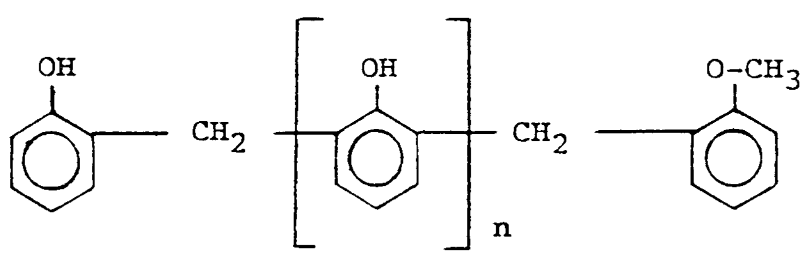

n = 0 - 13

or

c4) low molecular or oligomeric di-, tri- or polyols, which can contain additionally ether, ester, amino, amide, carbonate or carbamate groups,

with

d) low molecular mono-, di-, tri- or polyepoxides, in which the number of moles of epoxy groups must

not exceed the number of moles of dihydro-2.5-furanedione groups in polymer a) more than twofold.

Detailed description of the preferred embodiments

The mixture of the two polymer components can be dissolved, together with a suitable catalyst, and possibly together with (0.1 - 2 % by weight of a suitable catalyst, relative to the sum of the two components, and possibly together with pigments and additives, such as UV-stabilizers, levelling agents and surfactants, fungicides and other additives in a hydroxyl-group-free solvent or solvent mixture. The solid content can, preferably, be between 10 and 70 % by weight, more preferably, 25 to 65 % by weight. Beside, said catalyst can be in any amont, if there can be achieved effect of the present invention, usually, used in the range of 0.1 to 2 % by weight, relative to the sum of the two components, such mixture can be used preferably as stoving.

The polymer mixture can also be a solid in which the components a) and b) or a) and c) + d), mentioned above, are mixed thoroughly together with 0.1 - 2 % by weight of a suitable catalyst and possibly together with pigments and further additives as described above by suitable methods and subsequently milled. These powders can be applied to thermally stable substrates by suitable methods and can be baked at temperatures between 140 and 250 °C, preferably between 150 and 180 °C, resulting in mechanically and chemically very stable coatings.

Polymers, which are the main component b) of the polymer mixture can be common unmodified or modified epoxy resins on basis of bisphenol-A with an average molecular weight between 800 and 4000 g/mole, an epoxy equivalent between 400 and 2000 g polymer/mole per epoxy group, and an OH-number of 180 to 230 mg KOH/g polymer. Advantageous are products with epoxy equivalents between 400 and 2000 g polymer/mole per epoxy group, and especially advantageous are such with epoxy equivalents between 400 and 1100 g polymer/mole per epoxy group. Such polymers are supplied under various commercial names, such as e.g. Epikote (Shell), D.E.R. (Dow Chemicals; to be abbreviated as DOW, hereinafter.), Epiclon (DAINIPPON INK & CHEMICAL INCORPORATED; to be abbreviated as DIC, hereinafter.), Epotuf (Reichhold Chemie) or Beckopox (Hoechst).

The above mentioned higher molecular epoxy resins, with an epoxy equivalents of 250 to 6000 g polymer/mole per epoxy group, are especially advantageously with epoxy equivalents between 1500 and 6000 g polymer/mole per epoxy group.They can be mixed with, low molecular mono-, di-, tri- or polyepoxides with an epoxy equivalents between 100 and 250 g/mole per epoxy group, which contains no or very few OH-groups per mole epoxy group.

Suitable monoepoxides are e.g. n-butylglycidylether, 2-ethylhexylglycidylether, phenylglycidylether, cresylglycidylether, p-tert.-butylphenylglycidylether, Cadura E-10 (Shell).

Examples for diepoxides and diglycidylethers are; butadienediepoxide, vinylcyclohexenediepoxide, 3.4-epoxycyclohexylmethyl(3.4-epoxy)cyclohexanecarboxylate, bisphenol-A-diglycidylether, ethanediol-diglycidylether, 1.4-butanediol-diglyci-dylether, neopentylglycoldiglycidylether, 1.6-hexanedioldiglycidylether, diglycidylphtalate, diglycidylisophtalate, diglycidyladipate, resorcindiglycidylether, 4.4'-di-(glycidylether)-diphenylsulfone.

Suitable tri- or polyglycidyl- or -epoxy compounds are for example, glycerintriglycidylether, trimethylolpropanetriglycidylether, ricinusoiltriglycidylether, tetraglycidylmethylen, sorbitolpolyglycidylether, poly-glycidylisocyanurate (Denacol 301, Nagase) as well as epoxidized polybutadiene.

The crosslinkable component b) can also consist of an acrylate copolymer, built from esters of acrylic or methacrylic acid with 1 - 18 carbon atoms in the side group, alone or in a mixture with vinyl monomers such as, e.g. styrene and possibly other radically polymerizable monomers with nitrile, amide, dialkylamino, alkoxyalkylamido or other groups listed above. These additionally contains monomers with hydroxyl or epoxide groups with at least one hydroxy, and two epoxy groups per macromolecule. The average molecular weight of these polymers can be between 2000 and 20.000 g/mole, and the glass transition temperature between -20 and 100 °C.

Reactive comonomers for these crosslinkable polymers are for example, hydroxy-propylacrylate, hydroxyethylmethacrylate, hydroxypropylmethacrylate, acrylic or methacrylic acid esters of polyethlylene- or polypropyleneglycol with 1 - 20 alkyleneoxide units in the side-chain, glycidylacrylate, glycidylmethacrylate or methyloxiranylmethylmethacrylate.

The described copolymers, can also be present in a mixture with the low molecular mono-, di-, tri- or polyepoxide compounds mentioned earlier.

Furthermore, an epoxy-phenol-novolak or an epoxy-bisphenol-anovolak can also be used as a crosslinking component b), in which at least two epoxy and one hydroxyl group have to be present per macromolecule. Such products are supplied by various companies, as e.g. Epiclon N (DIC) or D.E.N. (Dow).

Such novolaks can also be used in a mixture with the mentioned mono-, di-, tri- and polyepoxides.

The crosslinking component c) can also be a mixture consisting of a hydroxyl group, containing of acrylate copolymer, built from esters of acrylic or methacrylic acid, vinyl monomers, hydroxyl-group containing monomers, such as e.g. hydroxy-ethylacrylate, hydroxypropylacrylate, hydroxymethyl-methacrylate or hydroxypropylmethacrylate and possibly further monomers with nitrile, dialkylamino, unsubstituted or substituted amide, carboxylic or sulfonic groups in which at least two hydroxyl groups have to be present per macromolecule. Most suitable are copolymers with OH-numbers, between 40 and 150 mg KOH/g per solid polymer and a glass transition temperature between -10 and 80 ° C

or

a branched or linear phenol-fonnaldehyde-novolak with at least two hydroxyl groups per macromolecule

or

a branched or linear polyester, made from aliphatic, cycloaliphatic or aromatic di- or polycarboxylic acids or their anhydrides, aliphatic, cycloaliphatic and/or arylaliphatic di- and polyols or triglycerides of long-chain fatty acids, in which at least two hydroxyl groups have to be present per macromolecule, or advantageously polyesters with OH-numbers between 40 and 150 mg KOH/g per solid polymer

in a mixture with

one or more of the mono-, di-, tri- and polyepoxy compounds mentioned above.

The main component c) can also be a mixture of; one or more low molecular di- or polyols, and one or more of the low or high molecular mono-, di-, tri- or poly-epoxy compounds mentioned above.

Suitable as hydroxyl components are e.g. ethyleneglycol, propyleneglycol, 1.4-butanediol, 1.6-hexanediol, diethyleneglycol, dipropyleneglycol, urethanedioles as e.g. K-Flex 320 (King Industries), glycerin, trimethylolpropane, ethoxylated products of glycerin and trimethylolpropane, poly-(caprolactone-)di-and polyols (Tone Products, Dow Chemicals), triethanolamine, triisopropanolamine, pentaerythrit, dipentaerythrit or sorbitol.

Suitable catalysts for the crosslinking of anhydride-or carboxylic-group-containing, polymers with epoxy- and hydroxyl-group containing low or high molecular compounds are e.g.

- aromatic amines, such as benzyldimethylamine, methylbenzyldimethylamine, 2.4.6-tris-(dimethylaminomethyl)phenol and their salts with preferably organic carboxylic acids,
- heterocyclic compounds such as 4-dimethylaminopyridine, n-methylimidazole, 2-ethyl-4-methylimidazole,
- alicyclic compounds such as 1.4-diazabicyclo-2.2.2. octane, 1.8-diazabicyclo 5.4.0.undecene, N.N'-dimethylpiperazine, hexamethylenetetramine and their salts with preferably organic carboxylic acids,
- tertiary phosphines such as tributyl-, trioctyl-, tricyclohexyl and triphenylphosphine,
- tertiary aliphatic amines such as triethylamine, triisopropylamine, tri-n-butylamine, triisooctylamine, tetramethylguanidine, and their salts with preferable organic carboxylic acids,
- quaternary ammonium salts such as benzyltrimethylammoniumchloride, trimethyloctylammoniumchloride, trimethyldodecylammoniumchloride.

The choice of catalysts and of their amount, is dependent upon the composition of the polymer mixture, the desired crosslinking and the required pot-life. Phosphines and salts as catalysts needs curing temperatures in excess of 120 ° C, but the result in longer pot-lives is up to one week. Aromatic and aliphatic amines and basic heterocycles accelerate the crosslinking also below 100 ° C, but shorten the pot-life of the polymer mixtures.

The polymer mixtures dissolved in suitable solvents, such as ethers, esters, etherglycolacetates, ketones and aromatic solvents or their mixtures, can be formulated with suitable catalysts, possibly further solvents, pigments and other additives, into coatings with a solid content between 20 and 70 % by weight, preferable between 40 and 60 % by weight. They can be applied as one- or two-component coatings with the generally known application methods, such as spraying, dipping or rolling, to flat or already formed substrates, consisting of glass, metals or plastics. Dependent upon the solvent composition, the content of dihydro-2.5-furanedione-, carboxylic-, OH- and epoxide-groups and the used catalyst, these coatings can be crosslinked in a wide temperature range between ambient temperature and 250 ° C to excellent, solvent resistant, transparent, glossy, mechanical strainable and well adhering coatings.

Surprisingly we found that 3-methylene-butanediacid-1.4 which is partly or not at all soluble in hydroxyl-group-free solvents (see B.E. Tate, "Vinyl and Diene Monomers", Kap. 4, S. 205 ff., Wiley-Interscience, New York, 1970) is dissolved in acetic anhydride at temperatures above 60 ° C under anhydride formation and that the resulting stable solution is miscible with numerous vinyl and acrylate or methacrylate monomers and can be radically polymerized at temperatures above 100 ° C. In a first step, a mixed anhydride of acetic acid and 3-methylene-butane-diacid-1.4 is formed beside 3-methylene-dihydro-2.5-furanedione. During the polymerization at temperatures above 100 ° C, further 3-methylene-dihydro-2.5-furanedione is formed from the mixed anhydride while acetic acid is split off, which polymerizes with the other comonomers. Care has to be taken that the polymerization temperature doesn't exceed 140 °C since above this temperature a rearrangement to citraconic anhydride is to be reckoned with as studies by Nagai, Yoshinaga and Yoshida (Kobunshi Kagaku, 24, No. 272, 5. 790-794, 1968) have shown.

The formation of 3-methylene-dihydro-2.5-furanedione from acetic anhydride and 3-methylene-butanediacid -1.4 can occur before or during polymerization. The formed acetic acid and still present acid anhydride have no noticable influence on the polymerization.

After the end of the polymerization, free carboxylic groups can be produced by partial reaction of the anhydride polymer, with monofunctional hydroxy, primary or secondary amino or epoxy compounds, at temperatures between 20 and 150 °C, under formation of 2-disubstituted butanediacidhemiester or -hemiamide. Free carboxylic groups accelerate the crosslinking of the copolymers with epoxy resins, by reaction with epoxy groups while the hemiester- or hemiamide-groups, depending upon the choice of monofunctional component, influence positively to the compatibility of the copolymerepoxy-mixtures ,and the mechanical properties of the crosslinked films.

Subjects of the present invention are also processes for the preparation of a dihydro-2.5-furanedione groups containing copolymers. The process starts with the polymerizable 3-methylene-butanediacid-1.4, which is dehydrated with a 0.05 to 2 fold molar excess of acetic anhydride to dihydro-3-methylene-2.5-furanedione.

In one process, this is dissolved in the respective amount of acetic anhydride at 70 to 75 °C. This mixture, which consists of 3methylene-dihydro-2.5-furanedione, mixed anhydrides of 3-methylene-butanediacid-1.4 and acetic acid in an excess of acetic anhydride, is polymerized with other radically polymerizable vinyl, acrylate and methacrylate monomers in a solvent or solvent mixture. The boiling range is between 100 and 180 °C by radical peroxy- or azo-initiators at reaction temperatures of 120 to 140 °C. During or after polymerization the acetic acid/acetanhydride mixture, possibly together with a low boiling solvent, is removed by distillation.

Another process of manufacture , is based upon polymerization and anhydride formation at the same time, at temperatures of 100-140 °C. In this process, a peroxy- or azo-initiator solution ,and a mixture of vinyl and acrylate or methacrylate monomers is dropped into, a mixture of acetic anhydride and a hydroxylic-group-free solvent or a solvent mixture with a boiling point between 110 and 200 °C. Acetates, glycoletheracetates and aromatic solvents are especially preferably because of forming an azeotrope with acetic acid. And in regular periods solid 3-methylene-butanediacid-1.4 is added with suitable solids-dosing equipment. Acetic anhydride can be present in a 0.05 - 2 molar excess relative to the used 3methylene-butanediacid-1.4. The solid carboxylic acid becomes immediately soluble by anhydride formation and is incorporated into the polymer chains preferably. The formed acetic acid can be distilled off, during or after the polymerization together with eventually present acetic anhydride and possibly present solvents with a boiling point below 140 °C.

Another pathway, leading to polymers with polymerized dihydro-3methylene-2.5-furanedione groups, is the copolymerization of hemiesters of 3-methylene-butanediacid-1.4 with other acrylates, and subsequent alcohol split off at temperatures above 120 °C.

Hemi-esters of 3-methylene-butanediacid-1.4 with short-chain aliphatic alcohols of Cl-C4 , are polymerizable and their synthesis is simple and well known according to the teaching of USP 3.484 478. Contrary to the 3-methylene-dihydro-2.5-furanedione, these hemi-esters are well soluble in the common acrylic monomers and styrene, and can easily be copolymerized with suitable radical initiators in hydroxyl-group-free solvents, at a temperature range of 60 to 150 °C. Surprisingly we found that already during polymerization, and temperatures above 100 °C, the desired reactive furanedione groups are formed from the hemiester-groups by alcohol split-off. To prevent the reformation of hemi-ester groups the split off alcohol, preferably methanol, ethanol or n- or isobutanol has to be removed immediately from the polymer solution by distillation. Therefore, preferably solvents or solvent mixtures are used for the polymerization, the boiling points of which are at least 20 to 40 °C higher than the alcohol split-off-temperature, or which form an azeotrope with the alcohol. This purely thermal alcohol split-off, is not complete as only between 50 and 70 % of the theoretically possible anhydride amount is formed. The residual content of free carboxylic groups is desired, since these groups participate in the crosslinking reactions. Higher anhydride conversions up to 90 %, are possible with acid or basic catalysis. The catalysed alcohol split-off can be done during or after polymerization. The latter is recommended, with the use of tertiary amine catalysts since they also act as radical quenchers. It is also possible to carry out the copolymerization with 3-methylene-butanediacid-1.4, in a solvent mixture which contains low molecular alcohol, preferably n-butanol, in presence of an acid catalyst such as p-toluenesulfonic acid or methanesulfonic acid at temperatures above 100 °C. In this process, the polymerizable 3-methylene-butanediacid-1.4, is converted to a predominant degree into the

polymerizable hemi-ester. Further, diester and some dihydro-3-methylene-furanedione-2,5 is formed . Also in this case, the hemi-ester groups in the polymer, can be cyclized by temperature elevation, and acid catalyst under alcohol split-off. This method is recommended only for applications, in which the acid catalyst in the resin is not interfering.

The polymers manufactured, according to the described processes, contains 5 to 30 % by weight of copolymerized dihydro-3-methylene2.5-furanedione, prepared by dehydration of 3-methylene-butanediacid-1.4 with an 0.05 to 2 fold molar excess of acetic anhydride, and O - 95 % by weight of non-functional esters of acrylic, and/or methacrylic acid with 1 to 18 carbon atoms in the alcohol residue, and 40 to 95 % by weight of aromatic vinyl compounds, a possible additional 0.5 to 10 % by weight of polar aprotic monomers with at least one nitrile, dialkylamino or N-heterocyclic side-group or 0.5 to 5 % by weight of an $\alpha,\beta$-unsaturated sulfonic acid.

Examples of monomers are; n-butylacrylate, 2-ethylhexylacrylate, laurylacrylate, methylmethacrylate, ethylmethacrylate, n-butylmethacrylate, isobutylmethacrylate, 2-ethylhexylmethacrylate, laurylmethacrylate, tridecylmethacrylate, octadecylmethacrylate, styrene, the isomeric meta-, ortho-, paravinyltoluenes, 2-vinylnaphtaline, acrylonitrile, methacrylonitrile, fumarodinitrile, dimethylaminomethylmethacrylate, 2vinylpyridine, 4-vinylpyridine, n-vinylcarbazole, n-vinylimidazole and their salts with inorganic or preferably organic acids, acrylamido-2-methylpropanesulfonic acid, p-styrenesulfonic acid and their salts with alkali metals or preferably with tertiary aliphatic, cycloaliphatic or aromatic amines.

The anhydride group containing polymers, can possibly contain further radically polymerizable monomers, such as e.g. acrylamide, methacrylamide, butoxymethylacrylamide, isobutoxymethylmethacrylamide or glycidylmethacrylate.

Suitable initiators are peroxides, peresters and azo-compounds, which are soluble in the solvents used for the polymerization, and which at polymerization temperature have a half-life of 30 to 120 minutes.For example, tert.-mentioned above.butyl-peroybenzoate, dibenzoylperoxide, dicumylperoxide, tert.-butylperoxy-2-ethylhexanoate, 1.1'-bis-(tert.-butyl-peroxy)-butane, 1.1'-bis-(tert.butylperoxy)-3.3.5-trimethylcyclohexane, 1.1'-azobis-(cyclohexanecarbodinitrile), and 2.2'-azobis-(methylbutyronitrile), which are added in amounts of 0.1 to 5 % by weight, relative to the monomer mixture, during polymerization.

Suitable solvents for the polymerization, according to the two processes of the invention are, hydroxyl-group-free solvents such as esters, glycoletheresters, ethers and aromatic solvents.

Examples of solvents; ethyl-, propyl-, butyl- and 2-ethylhexylacetate, the respective propionates and butyrates, monoalkyletheracetates such as methyl-, ethyl-and butylglycolacetate, methoxypropylacetate (Dowanol PMA, Dow Chemicals)l butyldiglycolacetate, ethyleneglycoldimethylether, ethyleneglycol-diethylether, diethyleneglycoldimethylether, tetrahydrofurane and dioxane, as well as mixtures of two or more of the named solvents.

The polymers obtained by the two processes have molecular weights Mn between 3,000 and 30,000 g/mole, preferbly between 3,000 and 10,000 g/mole. Depending on the monomer composition, the glass temperatures T , determined by differential scanning of polymer samples, precipitated from hexane, can be between - 20 and 120 ° C. After the polymerization, the polymers, now containing dihydro-2.5-furanedione groups, can additionally react, as a modification here of with monofunctional compounds, which contains hydroxyl, glycidyl or primary or secondary amino groups at temperatures between 20 and 150 ° C. Possibly with the addition of a suitable catalyst, between 5 and 50% of the dihydro-2.5-furanedione groups react, resulting in the formation of carboxyl and hemi-ester or hemi-amide groups. Suitable for this modification are short-chain alcohols, such as methanol, isopropanol, and preferebly long-chain branched alcohols, e.g. 2-ethyl-hexanol and isodecylalcohol, or etheralcohols such as butylglycol and butyldiglycol. Primary or secondary monoamines with aliphatic, cycloaliphatic or aromatic groups can serve as amino-components. Suitable epoxy compounds are monofunctional epoxides and glycidylethers such as e.g., l-epoxyoctane, propylglycidylether, phenylglycidylether or Cadura E 10 (Shell). The polymer solutions thus obtained have solid contents of 30 to 70 % by weight, preferebly between 40 and 60 % by weight more preferably.

The polymers, prepared by the two described manufacturing processes, and possibly modified with monofunctional hydroxyl-, primary or secondary amino- or epoxy compounds, have to contain at least two 3-disubstituted dihydro-2.5-furanedione groups, and at least one carboxylic or sulfonic group per macromolecule. Typical contents of polymerized 3-methylene-dihydro-2.5-furanedione are between 5 and 25 % by weight, preferebly between 8 and 20 % by weight, and most preferebly between 12 and 15 % by weight.

Between 0.1 and 10 % by weight of monomers, with nitrile, amide, dialkylamino, alkoxymethylamido or N-heterocyclic groups, may be additionally introduced.

The non-reactive esters of acrylic or methacrylic acid, possibly in a mixture with vinyl monomers, such as preferably styrene, can be present in weight portions between 40 and 95 %.

Content of polymerizable sulfonic acid can be between 0.1 and 5 % by weight, preferably.

The portion of the 3-methylene-butanediacid-1.4, 3-methylenebutanediacid-hemi-ester or -amide units, which are built into the polymer and are generated by the modifications mentioned above, can be between 0.5 and 10 % by weight, preferably. Polymers of the described species, can be made into nearly any monomer compositions, contrary to maleic anhydride containing copolymers, and thus can be adjusted to numerous applications e.g. concerning glass transition and softening points. They can be used as solutions, or after removal of the solvents as solids.

Because of their content of reactive anhydride groups, these manufactured polymers can be used in all applications, in which a further reaction with low or high molecular compounds, which have groups reacting with anhydride groups, takes place.

Known functional groups which reacts with anhydride groups by addition are e.g. OH-, $NH_2$-, NHR- and epoxy-groups.

Possible applications for the polymers manufactured according to the described processes are e.g. coatings, textile, paper additives, adhesives and casting resins. These easily manufactured polymers, are suitable for numerous polymeranalogous reactions in organic or pharmaceutical chemistry.

Especially important uses for, according to the invention, easily manufactured polymers, results in mixtures with high but also low molecular hydroxyl and epoxy compounds in the coatings sector. There for especially coatings but also adhesives have to be thought.

It results in that the anhydride group, containing polymers, are main components of the polymer mixtures, while the glycidyl- or OH-group-containing crosslinkers are only secondary components with 1 to 35 % by weight, preferably relative to the anhydride group containing polymers.

An especially interesting application of the described crosslinking systems are varnishes for containers made of tinplatesteel, tin-free-steel or aluminium.

Such coatings are baked at temperatures up to 250 °C, although they must not turn yellow or become brittle. Common systems, based upon phenol-folmaldehyde-resins, in combination with bisphenol-A-epoxy resins of aromatic polyesters, or epoxy acrylates together with melamine or benzoguanine resins, have disadvantages concerning the mechanical deformability. Odour, tastelessness and chemical stability under conditions of sterilisation and against the contents of the containers.Another problem is also, the split-off of low molecular compounds such as formaldehyde, methanol or butanol during and after the baking. This can be avoided by epoxideanhydride-systems, which crosslink in reaction is published e.g. in EP-PS O 002 718. The disadvantage is, that an inactive polymeric levelling agent, is necessary in order to flexibilize the coatings film. The same is valid for styrene/maleic anhydride copolymers as, they are supplied e.g. from Atlantic Richfield as SMA 3040 for this purpose. We have found that acrylat copolymers with 12 to 15 % by weight polymeric dihydro-3-methylene-2.5-furanedione, and 2 to 5 % by weight carboxylic groups and a Tg between 10 and 40 °C, in combination with, bisphenol-A epoxy resins with the epoxy-equivalents between 450 and 1000 g polymer/mole per epoxy group, and possibly with the addition of low molecular aliphatic, aromatic or cycloaliphatic di-, tri- or polyepoxides, results in excellently flexible and stable varnishes of very good adhesion to the named metallic substrates. The baking temperatures necessary for thick coating, layers of 40 to 50 micrometers, are between 5 minutes at 180 °C and 1 minute at 250 °C. These varnish systems need no additional inactive levelling agents, at solid contents between 40 and 55 % by weight.

Catalysts, which are used from 0.05 to 1 % by weight, preferably, to the coating mixture, aliphatic and cycloaliphatic tertiary amines, their salts with inorganic or preferably organic acids as well as imidazoles and quaternary ammonium salts can serve. Especially advantageous and effective are the FDA-approved compounds.

Another application area for which the polymer mixtures, according to the invention, can be used advantageously, are crosslinkable powder coatings.

For this purpose, solutions of anhydride containing copolymers with a content of, 15 to 25 % by weight, preferably, 3-methylene-dihydro-furanedione, and a content of O to 5 % by weight, preferably, butanediacidhemiester or -hemiamide, have to be freed completely of their solvent content, by vacuum distillation. The glass transition temperatures of these polymers should be between 60 and 120 °C, preferably between 70 and 90 °C, which can be achieved easily by a high content of styrene or methylmethacrylate. After crushing, the acrylate copolymer is thoroughly mixed with suitable solid hydroxyl- and epoxyfunctional polymers, or mixtures of low and high molecular hydroxyl- and epoxy-functional compounds, as well as with conductivity improvers, additives, pigments and catalysts, e.g. in extruders, and subsequently ground to particle sizes suitable for the coating. Suitable hydroxyl-and epoxy-group-containing components of the powder-coatings mixtures are, solid epoxy resins based upon bisphenol-A with epoxy-equivalents of 500-4000 g polymer/mole per epoxy group, and softening points of 60 to 110 °C such as e.g. Epotuf 002, 004, 007 or 009 (Reichhold Chemie), glycidylgroup-containing polyacrylates with epoxy-equivalents between 400 and 600 g/mole per epoxy group, in a mixture with OH-functional polyesters or polyacrylates with OH-numbers between 20 and 80 g KOH/g polymer, but also suitable polyfunctional polyglycidyl compounds such as e.g. triglycidylisccyanurate.

Such powder-coatings can be applied by various known podercoating processes, e.g. with electrostatic spray-guns', suitable for metallic substrates, baked at temperatures between 150 and 220 ° C, wich results in well levelling, highly glossy, and chemically as well as mechanically very resisting coating films.

Examples

Example 1

110 g of ethylglycolacetate (EGA) were put into a 1000 ml 4-necked flask, equipped with a reflux condenser, a stirrer, a gas tube and a Claisen-attachment with two dropping funnels, and were flushed for 20 min. with nitrogen and heated to 110-120 ° C. Meanwhile, a mixture of 110 g EGA, 36.5 g dihydro-2-methylene-2.5-furanedione, llOg styrene, 55 g n-butylacrylate, 17.6 g methacrylic acid and 22 g n-butylmethacrylate was put into one of the dropping funnels, and a solution of 5 g tert.
butyl-peroxy-benzoate in 55 g EGA was put into the other dropping funnel and were flushed with nitrogen. To start the polymerization, 60 g monomer solution and 10 ml initiator solution were added together. After 45 min., the rests of the initiator and the monomer solutions were added during two hours. The polymerization was continued for another 1.5 hour at 130 ° C.

The solid content of the polymer solution was 46.92% by weight (1 h at 180 ° C).
Mn = 5000 g/mole, $M_w$ = 12,400 g/mole

Example 2

140 g of butylglycolacetate (BGA) were put into a 1000 ml 4-necked flask, equipped with a reflux condenser, a stirrer, a gas tube and a Claise attachment with two dropping funnels, and were flushed for 20 min. with nitrogen and heated to 120-130 ° C. Meanwhile a mixture of 80 g BGA, 28.9 g dihydro-2-methylene-2.5-furanedione, 110 g styrene, 55 g n-butylacrylate, 18 g methacrylic acid and 30 g n-butylmethacrylate was put into one of the dropping funnels, and a solution of 6.5 g tert. butyl-peroxybenzoate in 55 g BGA was put into the other dropping funnel, and both were flushed with nitrogen. To start the polymerization, 60 g monomer solution and 10 ml initiator solution were added together. After 60 min. the rests of the initiator and the monomer solutions were added during two hours. The polymerization was continued for another two hours at 140 ° C.

The solid content of the polymer solution was 46.18% by weight (1 h at 180 ° C).
$M_n$ = 11,400 g/mole, $M_w$ = 31,000 g/mole

Example 3

100 g of ethylglycolacetate (EGA) were put into a 1000 ml 4-necked flask, equipped with a reflux condenser, a stirrer, a gas tube and a Claisen attachment with two dropping funnels, and were flushed for 20 min. with nitrogen and heated to 130 ° C. Meanwhile a mixture of 100 g EGA, 33.2 g dihydro-2-methylene-2.5-furanedione, 75 g styrene, 75 g n-butylacrylate, 16 g methacrylic acid and 20 g n-butylmethacrylate was put into one of the dropping funnels, and a solution of 7 g tert. butyl-peroxy-benzoate in 50 g EGA was put into the other dropping funnel, and both were flushed with nitrogen. To start the polymerization, 60 g monomer solution and 10 ml initiator solution were added together after 30 min. the rests of the initiators and the monomer solutions were added during 1.5 hours. The polymerization was continued for another 2.5 hours at 130 ° C.

The solid content of the polymer solution was 47.45% by weight (1 h at 180 ° C).
Mn = 4,900 g/mole, $M_w$ = 11,300 g/mole

Example 4

130 g of butylglycolacetate (BGA) were put into a 1000 ml 4-necked flask, equipped with a reflux condenser, a stirrer, a gas tube and a Claisen attachment with two dropping funnels, and were flushed for 20 min. with nitrogen and heated to 130-140 ° C. Meanwhile a mixture of 90 g BGA, 19.3 g dihydro-2-methylene-2.5-furanedione, 110 g styrene, 55 g n-butylacrylate, 19.8 g methacrylic acid and 40 g n-butylmethacrylate in one dropping funnel and a solution of 5 g tert. butyl-peroxy-benzoate in 55 g BGA , into the other dropping funnel and both were flushed with nitrogen. To start the polymerization, 60 g

monomer solution and 10 ml initiator solution were added together. After 50 min. the rests of the initiator and the monomer solutions were added during 3.3 hours. The polymerization was continued for another two hours at 140 °C.

The solid content of the polymer solution was 46.18 % by weight (1 h at 180 °C).

$M_n$ = 1,400 g/mole, $M_W$ = 31,000 g/mole

Example 5

a) A mixture of 417.9 g 3-methylene-butane-diacid-1.4, and 675 g acetic anhydride, was heated in a 2000 ml flask, equipped with a reflux condenser and stirrer, to 76 °C until a clear solution was obtained. After cooling, 0.5 g 2.6-di-tert.-butyl-4-methylphenol were added to the solution.

b) A mixture of 165 g toluene and 248 g BGA, was flushed with nitrogen in a 2000 ml flat-flange reactor, equipped with a reflux condenser, a stirrer, a gas tube and a Claisen attachment with two dropping funnels. A mixture of 300.6 g of solution a), 150.5 g styrene, 201 g n-butylacrylate and 44.6 g n-butylmethacrylate was put into one of the dropping funnels, and a solution of 8.3 g tert. butyl-peroxy-benzoate in 89.1 g BGA was put into the other dropping funnel, and both are flushed with nitrogen.

Initiator and monomer solutions were dropped into the solvent mixture during 2.3 hours and the reaction was continued for another two hours at 140 °C.

The solid content (1 h at 180 °C) was 42.5 % by weight.

The polymer solution was cooled to 100-110 °C, and a distillate was taken off at a boiling range of 34-39 °C/60 mbar (water jet pump). 200 g to toluene are added to lower the viscosity, and again distilled off. According to GC-analysis this latter distillate contained no more acetic acid or anhydride.

The highly viscous, slightly turbid resin solution was diluted with 200 g BGA under stirring at 110 °C.

The solid content of this polymer solution was 48.2% by weight.

$M_n$ = 9,000 g/mole, $M_w$ = 19,000 g/mole

c) 245.9 g of polymer solution b) was heated to 110 °C in a 500 ml flask, equipped with a reflux condenser, dropping funnel and a stirrer, a solution of 9.8 g 2-ethylhexanol and 0.08 g 4-dimethylaminopyridine in 25 g BGA was dropped in during 30 minutes and stirred for 1.5 hours at 115 °C. The solution became transparent and had a solid content of 43.5 % by weight.

d) 245.9 g of polymer solution b) were reacted, as described under c), with a solution of 4.3 g 2-dimethylaminoethanol-1 and 0.08 g 2-ethyl-l-methylimidazole in 25 g BGA. A brown coloured, clear solution was obtained.

e) 245.9 g of polymer solution b) were modified according to c) with 4.5 g l-methoxypropanol-2.

Example 6

A mixture of 400 g butylglycolacetate (BGA) and 84 g acetic anhydrde was put into a 2000 ml flat flange reactor equipped with a reflux condenser, a stirrer, a gas tube and a Claisen attachment with two dropping funnels, and were flushed for 30 min. with nitrogen and heated to 130 °C under stirring. Meanwhile, a mixture of 150 g methylmethacrylate, 122.3 g 2-ethylhexylacrylate and 131.1 g n-butylmethacrylate was put in one of the dropping funnels, and a solution of 8.5 g tert. butyl-peroxybenzoate in 100 g BGA was put into the other dropping funnel, and both were flushed with nitrogen. The polymerization was started by addition of 100 ml monomer mixture, 12 ml initiator solution and 12.8 g solid 3-methylene-butane-diacid-1.4. After 30 min.of polymerization time, the rest of the initiator and the monomer solutions were added during 1.5 hours, and parallel to that 12.8 g of 3-methylenebutane-diacid-1.4 each were added in 10 minute intervals. The polymerization is continued another two hours.

The solid content was 46% by weight (1 h at 180 °C).

The polymer solution was cooled to 65 °C, and reduced to a solid content of 52% by weight by an vaccum oil pump. According to GC this solution was free of acetic acid and anhydride.

$M_n$ = 12,800 g/mole, $M_w$ = 37,400 g/mole

Example 7

a) A mixture of 84 g 3-methylene-butane-diacid-1.4 and 69 g acetic anhydride, was heated in a 500 ml flask, equipped with a reflux condenser and a stirrer, to 76 °C until a clear solution was obtained. After cooling, 0.1 g 2.6-di-tert.-butyl-4-methylphenol were added to the solution.

b) 328 g of BGA were flushed with nitrogen in a 2000 ml flat flange reactor, equipped with a reflux condenser, a stirrer, a gas tube and a Claisen attachment with two dropping funnels and heated to

130° C. A mixture of 153 g of solution a), 123.2 g methylmethacrylate, 100.4 g 2-ethylhexylacrylate and 105.9 g n-butyl-methacrylate was put into one of the dropping funnels, and a solution of 7.0 g tert. butyl-peroxy-benzoate in 82.1 g BGA was put into the other dropping funnel, and both are flushed with nitrogen. For the start 10 ml initiator solution and 70 ml monomer solution, were added to the hot BGA , and polymerized for 30 minutes. Subsequently the rest of the initiator and monomer were added during 50 minutes, and the reaction was continued for another 3 hours.

The solid content (1 h at 180° C) was 45 % by weight.

The polymer solution was cooled to 65° C, put into a rotary evaporator with a vacuum oil pump,and was concentrated until no acetic acid can be detected by GC in the polymer solution.

The solid content of this polymer solution was 63.2% by weight.

$M_n$ = 7,240 g/mole, $M_w$ = 18,700 g/mole

Example 8

A mixture of 250 g butylglycolacetate (BGA), 215 g toluene and 71 g acetic anhydride was put into a 2000 ml flat-flange reactor, equipped with a reflux condenser, a stirrer, a gas tube and a Claisen attachment with two dropping funnels, and were flushed for 30 min. with nitrogen, and heated to 137° C under stirring. Meanwhile, a mixture of 48.3 g methylmethacrylate, 48.3 g styrene, 96.6 g n-butylacrylate, 116.7 g n-butylmethacrylate and 61.7 g BGA into one of the dropping funnels, and a solution of 5 g l.l'-azobis-(cyclohexanecarbonitrile) in 100 g toluene was put into the other dropping funnel and both were flushed with nitrogen. The polymerization was started by an addition of 50 ml monomer solution, 15 ml initiator solution and 7.5 g solid 3-methylene-butane-diacid-1.4. After 30 min. of polymerization time, the rests of the initiator and the monomer solutions were added during one hour, and parallel to that, 7.5 g of 3-methylene-butane-diacid-1.4 each were added in 10 minute inter-vals. The polymerization was continued for another 2.5 hours.

The solid content was 35% by weight (1 h at 180° C).

The polymer solution was cooled to 65° C, and reduced to a solid content of 54% by weight, by an vacuum oil pump. According to GC this clear, medium viscous solution was free of acetic acid and anhydride.

$M_n$ = 11,500 g/mole, $M_w$ = 21,900 g/mole

Example 9

A mixture of 300 g of butylglycolacetate (BGA), 160 g toluene and 41 g acetic anhydride was put into a 2000 ml glas flat flange reactor, equipped with a reflux condenser, a stirrer, a gas tube and a Claisen attachment with two dropping funnels, and were flushed for 20 min. with nitrogen, and heated to 122° C under stirring. Meanwhile, a mixture of 61.7 g of methylmethacrylate, 96.6 g of n-butylacrylate, 116.7 g of nbutyl-methacrylate and 61.7 g of BGA into one of the dropping funnels, and a solution of 5 g l.l'-azobis-(cyclohexanecarbonitrile) in 90 g toluene was put into the other dropping funnel, and both were flushed with nitrogen. The polymerization was started by addition of 50 ml monomer solution, 15 ml initiator solution and 7 g solid 3-methylenebutane-diacid-1.4. After 35 min., polymerization time, the rests of the initiator and the monomer solutions were added during one hour, and parallel to that 7 g 3-methylene-butane-diacid-1.4 each were added in 10 minute intervals. The polymerization was continued for another 2.5 hours.

The solid content was 32.3% by weight (1 h at 180° C). Another 0.5 g azoinitiator dissolved in 3 g toluene were added, and the polymerization continues for another 2.5 hours. The solid content rised to 35% by weight. The polymer solution was cooled to 65° C and reduced to a solid content of 54% by weight by a vaccum water jet pump. According to GC this clear, medium viscous solution was free of acetic acid and anhydride.

$M_n$ = 11,800 g/mole, $M_w$ = 24,600 g/mole

Example 10

a) A mixture of 417.9 g of 3-methylene-butane-diacid-1.4 and 675 g acetic anhydride was heated, in a 2000 ml flask equipped with a reflux condenser and a stirrer, to 76° C until a clear solution was obtained.

After cooling 0.5 g 2.6-di-tert.-butyl-4-methylphenol were added to the solution.

b) A mixture of 250 g toluene and 248 g BGA was flushed with nitrogen, in a 2000 ml flat flange reactor equipped with a reflux condenser, a stirrer, a gas tube and a Claisen attachment with two dropping funnels and heated to 135° c. A mixture of 300.6 g of solution a), 150.5 g styrene, 201 g n-butylacrylate and 44.6 g nbutylmethacrylate was put into one of the dropping funnels, and a solution of 8.7 g tert.

butyl-peroxybenzoate in 90 g BGA was put into the other dropping funnel, and both were flushed with nitrogen. Initiator and monomer solutions were added during 2.3 hours, and the reaction was continued for another 2 hours. During the polymerization, 320 ml of a mixture consisting of toluene, acetic acid, acetanhydride and some BGA was distilled off at a slight vacuum (500 - 600 mbar). After the end of the polymerization, 100 g toluene were added, the temperature was raised to 150 - 155 °C, and another 150 ml distillate can be taken off, which contains no more acetic acid or anhydride.

The solid content of the almost clear, medium viscous polymer solution was 64.7 % by weight.

$M_n$ = 10,700 g/mole, $M_w$ = 23,100 g/mole

Example 11

110 g of ethylglycolacetate (EGA) were put into a 1000 ml 4-necked flask, equipped with a reflux condenser, a stirrer, a gas tube and a Claisen attachment with two dropping funnels, and were flushed for 20 min. with nitrogen, and heated to 120-130 °C. Meanwhile, a mixture of 110 g EGA, 46.3 g glycidylmethacrylate, 42.4 g hydroxyethylmethacrylate, 100 g styrene and 55 g n-butylacrylate was put in to one of the dropping funnels, and a solution of 5 g tert. butyl-peroxybenzoate in 55 g EGA in the other dropping funnel were flushed with nitrogen. To start the polymerization, 60 g monomer solution and 10 ml initiator solution were added together. After 45 min. the rests of the initiator and the monomer solutions were added during two hours. The polymerization was continued for another 2.5 hours at 140 °C.

The solid content of the polymer solution was 46.3% by weight (1 h at 180 °C).

$M_n$ = 9,500 g/mole, $M_w$ = 30,000 g/mole

The results of the coatings tests for the curable polymer mixtures, the compositions of which were described in examples 12 to 30 are put together in table 1. The polymer mixtures had been applied with a spiral coater, if not stated otherwise, to cleaned deep-drawn steel panels St 1405 (250xl00xl mm), 5 to 10 minutes flashed off at ambient temperature and baked in a coatings drying oven (Heraeus, Hanau). The cured coatings have between 50 and 60 µm.

Example 12 a-f

35 g each of the polymer solution from example I beakers with 13.3 g each bisphenol-A-epoxy resin Epotuf EP 001 (75% in toluene ; Reichhold AG, Hausen), with an epoxy equivalent weight (EEW) of 450 - 525 g/mole and 3 g each butyldiglycolacetate, and dispersed after addition of 0.3 g of one of the following catalysts:

a) benzyldimethylamine (BDA), b) 4-dimethylaminopyridine (DMAP), c) triphenylphosphine (TPP), d) methyltrioctylammoniumchloride, e) 1.5-diazabicyclo-(5.4.0)-5-undecene-2-ethylhexanoate (DBU-EHA; DIC, Tokyo), f) 2-ethyl-4-methylimidazole (EMI), for 5 minutes in a Dispermat (V. Getzmann) at 5-7,000 rpm. After degassing the slightly turbid polymer mixtures, apply to panels and baked for 5 minutes at 180 °C.

Example 13

29.4 g of the polymer solution from example 1 were dispersed together with 20 g bisphenol-A-epoxy resin solution Epotuf 004 (75% in EGA; Reichhold AG Hausen; EEW = 825-1025 g/mole), 5.3 g butyldiglycolacetate (BDGA) and 0.3 g DBU-EHA, after degassing the solution, coated steel panels and baked for 5 minutes at 180 °C.

Example 14

17.5 g of the polymer solution from example 1 were dispersed together with 24 g bisphenol-A-epoxy resin solution Epotuf 007 (75% in BGA; Reichhold AG Hausen; EEW = 1650-2000 g/mole), 5.4 g BDGA and 0.3 g DBU-EHA, after degassing the solution coated steel panels and baked for 5 minutes at 180 °C.

Example 15

24.6 g of the polymer solution from example 2 were dispersed together with 30 g of a 75% solution of Epotuf EP 007 (Reichhold AG Hausen) in BGA, 5 g bisphenol-A-diglycidylether Epotuf EP 139 (EEW = 175 - 195 g/mole), 5.5 g BDGA and 0.2 g DBU-EHA, after degassing the solution coated steel panels and baked for 5 minutes at 180 °C.

Example 16

29.3 g or the polymer solution from example 3 were dispersed together with 20 g of a 75% solution of Epotuf EP 004 in xylene (Reichhold AG Hausen), 5.3 g BDGA and 0.34 g EMI, after degassing the solution, coated steel panels and baked for a) 30 min. at 120 °C, b) 25 min. at 135 °C, c) 12 min. at 150 °C, d) 3 min. at 200 °C.

Example 17

30 g of the polymer solution from example 3 were dispersed together with 20 g of a 75% solution of Epotuf EP 004 in butylacetate, 4.0 g trimethylolpropanetriglycidylether Gr Chemie, Zurich) with an EEW = 142 g/mole, 6 g xylene and 0.3 g EMI, after degassing the solution was coated steel panels and baked for a) 45 min. at 80 °C, b) 30 min. at 120 °C, c) 10 min. at 150 °C.

Example 18

14 g Epotuf EP 001 (75% in xylene), 7.5 g xylene, 7.5 g BGA, 5 g BDGA and 0.3 g DBU-EHA were dispersed with

| | | | | | |
|---|---|---|---|---|---|
| a) 22.5 g | polymer | solution | from | example | 5c), |
| b) " | " | " | | " | 5d), |
| c) " | " | " | | " | 5e), |
| d) " | " | " | | " | 5f), |

coated steel panels after degassing the solution and baked for 5 min. at 180 °C.

Example 19

20 g of the polymer solution from example 8 were dispersed together with 5 g of a 75% solution of Epotuf EP 001 in xylene, 5 g BDGA, 0.2 g DBU-EHA and

a) 0.3 g methanol,
b) 0.5 g methanol,
c) 0.9 g 2-ethyl-hexanol,
d) 0.4 g butylglycol,
e) 0.4 g butyldiglycol,

after degassing coated steel and glass panels, and baked for 5 min. at 180 °C.

Example 20

20 g of the polymer solution from example 9 were dispersed together with 5.1 g of a 75% solution of Epotuf EP 001 in xylene, 5.1 g BDGA, 0.2 g DBU-EHA and

a) 0.3 g butylglycol,
b) 0.4 g butyldiglycol,

after degassing the solution coated steel and glass panels, and baked for 5 min. at 180 °C.

Example 21

30 g of the polymer solution from example 3 were dispersed together with 20 g of a 75% solution of Epotuf EP 001 in xylene, 4.0 g Grilonit G 1705 (Ems-Chemie, Zurich), 5.5 g xylene and 0.2 g EMI, after degassing the solution coatd steel panels and baked for 5 min. at 170 °C .

Example 22

18.3 g of the polymer solution from example 10 were dispersed together with 30 g of a 75% solution of

Epotuf EP 007 in EGA (EEW = 1600 - 2000), 5 g Epotuf EP 139, 10 g xylene and 0.5 g DBU-EHA, after degassing the solution coated steel panels and baked for a) 45 min. at 80 °C, b) 30 min. at 120 °C, c) 5 min. at 180 °C.

Example 23

15 g of the polymer solution from example 5f) and 15 g of the polymer solution from example 11 were dispersed together with 3 g BDGA and 0.3 g DBU-EHA, after degassing the solution coated steel panels and baked for 10 min. at 150 °C.

Example 24

20 g of the polymer solution from example 8 were dispersed together with 37.4 g Vinylan SA 252 (60% in xylene/Dowanol PMA, OH-number = 40 mg KOH/g solution; Reichhold AG, Hausen), 4 g Epotuf EP 139, 0.7 g BDG, 5.5 g BDGA and 0.5 g DBU-EHA, after degassing the solution coated steel panels and baked for 15 min. at 170 °C.

Example 25

20 g of the polymer solution from example 8 were dispersed together with 13.7 g of the OH-polyacrylate Vinylan SA 254 (60% in xylene-Dowanol PMA, OH-number = 80 mg KOH/g solution; Reichhold AG, Hausen), 4 g Epotuf EP 139, 0.7 g BDG, 5.5 g BDGA and 0.5 g DBU-EHA, after degassing the solution coated steel panels and baked for 15 min. at 170 °C.

Example 26

10 g of the polymer solution from example 8 were dispersed together with 57 g of the polyester Beckosol PO 002 (55% in Solvesso 150, OH-number = 25 mg KOH/g solution; Reichhold AG, Hausen), 6 g Epotuf EP 139, 0.7 g BDG, 3 g BDGA, 10 g xylene and 0.3 g EMI, after degassing the solution coated steel panels and baked for 15 min. at 180 °C.

Example 27

20 g of the polymer solution from example 9 were dispersed together with 15 g of a solution of 3 g phenol resin Varcum 29-107 in methyl-isobutylketone/ethanol 4:1 (Reichhold AG, Hausen), 5 g Epotuf EP 139, 5 g BGA and 0.5 g benzyldimethylamine, after degassing the solution coated tin plate and aluminium panels. The coated tin plate panels were baked for 5 min. at 200 °C, and the coated aluminium panels, 2 min. at 240 °C. The coatings on tin plate were light yellow, whereas the coatings on aluminium were a golden colour, and match their tone with the conventional "gold varnishes' for the interior coating of cans.

Example 28

15 g of the polymer solution from example 8 were dispersed with 0.5 g BG, 4.3 g Novolak-polyglycidylether Epiclon N 730S (DIC, Tokyo) with an EEW = 170-190 g/mole, 10 g toluene and 0.3 g DBU-EHA and after degassing a) coated tin plate and bake for 5 min. at 200 °C, b) coated to aluminium and baked 2 min. at 240 °C. The coatings on tin plate had a slight yellow tint, whereas the varnishes on aluminium showed a light gold tone.

Example 29

30 g of the polymer solution from example 3 were dispersed together with 1.3 g triisopropanolamine, 3.3 g Grilonit G 1705 (EMS-Chemie), 5 g BGA and 0.2 g EMI, after degassing, coated steel panels and baked for a) 45 min. at 80 °C, b) 20 min. at 120 °C, c) 10 min. at 150 °C.

Example 30

29 g of the polymer solution from example 7 were diluted with 1 g n-butanol, 10 g methyl-isobutylketone and 5 g xylene and dispersed together with a solution of 6.4 g urethanediol King-Flex K 320

(King Industries, Norwalk, CT), 4 g Epotuf EP 139 and 0.2 g DBU-EHA in 20 g methylisobutylketone and 6 g Dowanol PMA, after degassing, coated steel panels and baked for a) 30 min. at 105 °C, b) 10 min. at 140 °C.

TABLE 1 : Results of coating tests with polymer mixtures of examples 12 - 30

| EXAMPLE | POT-LIFE (DAYS) | SURFACE ASSESSMENT | GLOSS | BENDING TEST | PENDULUM HARDNESS | FASTNESS MEK | FASTNESS $H_2O$ | CROSS-CUT |
|---|---|---|---|---|---|---|---|---|
| 12a | 1 | 1 | 1 | 1 | 210 | 75+ | 75+ | GT0 |
| b | 1,5 | 1 | 2 | 1 | 211 | 75+ | 75+ | GT1-2 |
| c | 8+ | 1 | 1 | 1 | 209 | 75+ | 75+ | GT1 |
| d | 30+ | 3 | 2-3 | 3 | 197 | 75+ | 75+ | GT0-1 |
| e | 5 | 1 | 2 | 1 | 210 | 75+ | 75+ | GT0 |
| f | 1 | 2 | 2 | 1-2 | 200 | 75+ | 75+ | GT0 |
| 13 | 4 | 1 | 1 | 1-2 | 211 | 75+ | 75+ | GT1-2 |
| 14 | 5 | 2-3 | 2-3 | 4 | 217 | 60 | 75+ | GT3-4 |
| 15 | 4 | 2 | 3 | 1 | 187 | 75+ | 75+ | GT1-2 |
| 16a | 4 | 1 | 1 | 1 | 214 | 60 | 75+ | GT3-4 |
| b | " | 1 | 2 | 1 | 208 | 75+ | 75+ | GT2-3 |
| c | " | 1 | 2 | 1 | 212 | 75+ | 75+ | GT1-2 |
| d | " | 1 | 1-2 | 1 | 203 | 75+ | 75+ | GT0-1 |
| 17a | 1 | 1 | 2-3 | 2 | 146 | 25 | 75+ | GT4 |
| b | " | 1 | 1 | 1 | 200 | 75+ | 75+ | GT2-3 |
| c | " | 1 | 1 | 1 | 197 | 75+ | 75+ | GT2-3 |

EXPLANATION

Assessment : 1 = excellent 2 = good 3 = satisfactory 4 = bad
pendulum hardness according to König (DIN 52157); the solvent fastness is determined by rubbing back and forth (double rubs) of absorbent paper soaked with MEK or $H_2O$ ; cross-cut test according to DIN 53151.

TABLE 1 : (continued)

| EXAMPLE | POT-LIFE (DAYS) | SURFACE ASSESSMENT | GLOSS | BENDING TEST | PENDULUM HARDNESS | FASTNESS MEK | FASTNESS $H_2O$ | CROSS-CUT |
|---|---|---|---|---|---|---|---|---|
| 18a | 8 | 1-3 | 2 | 1-2 | 167 | 75+ | 75+ | GT0-1 |
| b | 3 | 1-2 | 2 | 1 | 164 | 75+ | 75+ | GT2 |
| c | 5 | 1-2 | 2 | 1 | 174 | 75+ | 75+ | GT0-1 |
| d | 6 | 1 | 1 | 1 | 175 | 75+ | 75+ | GT0-1 |
| 19a | 5 | 1 | 2 | 3 | 189 | 75+ | 75+ | GT0 |
| b | 5 | 1 | 1 | 2 | 196 | 75+ | 75+ | GT0 |
| c | 7 | 1 | 1 | 1 | 192 | 75+ | 75+ | GT0 |
| d | 7 | 1 | 1 | 1 | 193 | 75+ | 75+ | GT0 |
| e | 7 | 1 | 1 | 1 | 168 | 75+ | 75+ | GT0 |
| 20a | 12 | 1 | 1 | 1 | 195 | 75+ | 75+ | GT0 |
| b | 10 | 1 | 1 | 1 | 195 | 75+ | 75+ | GT0 |
| 21a | 1 | 1 | 2 | 1 | 192 | 75+ | 75+ | GT4 |
| b | " | 1 | 2 | 1 | 202 | 75+ | 75+ | GT2-3 |
| c | " | 1 | 2 | 1 | 200 | 75+ | 75+ | GT2 |

TABLE 1 : (continued)

| EXAMPLE | POT-LIFE (DAYS) | SURFACE ASSESSMENT | GLOSS | BENDING TEST | PENDULUM HARDNESS | FASTNESS MEK | FASTNESS $H_2O$ | CROSS-CUT |
|---|---|---|---|---|---|---|---|---|
| 22 | 5 | 1 | 3 | 1 | 187 | 75+ | 75+ | GT1-2 |
| 23 | 20 | 2 | 2-3 | 2 | 195 | 75+ | 75+ | GT2 |
| 24 | 3 | 3 | 2 | 3 | 203 | 75+ | 75+ | GT0 |
| 25 | 3 | 2 | 1-2 | 3 | 211 | 75+ | 75+ | GT2 |
| 26 | 20 | 1 | 1 | 2 | 174 | 60 | 75+ | GT0 |
| 27a | 3 | 3 | 1 | 1 | 193 | 75+ | 75+ | GT0 |
| b | " | 1 | 1 | 1 | 191 | 75+ | 75+ | GT0 |
| 28a | 5 | 2 | 1 | 2 | 182 | 75+ | 75+ | GT2 |
| b | " | 2 | 1 | 1 | 188 | 75+ | 75+ | GT0-1 |
| 29a | 1 | 1 | 1 | 1 | 197 | 60 | 75+ | GT1 |
| 29b | " | 1 | 1 | 1 | 203 | 75+ | 75+ | GT0 |
| c | " | 1 | 1 | 1 | 200 | 75+ | 75+ | GT0 |
| 30a | 2 | 1 | 2 | 3 | 173 | 75+ | 75+ | GT1 |
| b | " | 1 | 3 | 2 | 186 | 75+ | 75+ | GT0 |

**Claims**

**1.** A polymer mixture containing two reactive polymers, a hydroxyl-group-free organic solvent, and a catalyst;

wherein said two reactive polymers essentially consisting of an acrylate copolymer (a) represented by following formula (I) and an epoxy polyether (b) represented by following formula (II):

(a):

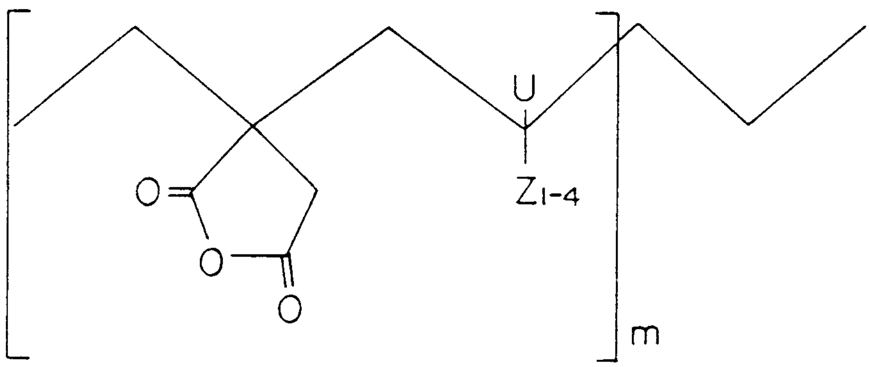

( I)

wherein

U is a chemical group selected from a group consisting of -H, $-CH_3$, -COOH and $-COOCH_3$,

m is an integer from 1 to 200,

$Z_1$ is $-COO-(CH_2)_{0-17}-CH_3$,

$Z_2$ is a chemical group selected from a group consisting of phenyl group, meta-substituted alkylphenyl group, ortho-substituted alkylphenyl group and para-substituted alkylphenyl group,

$Z_3$ is a chemical group selected from a group consisting of -C = N, $-CONH_2$, $-CON(alkyl)_2$ and pyridyl group,

$Z_4$ is a chemical group selected from a group consisting of -COOH, $-alkyl-SO_3H$ and $-aryl-SO_3H$,

wherein said acrylate copolymer having a main chain partially substituted by $-CH_2$ group, and having at least two dihydro-2,5-furanedione groups and at least one $Z_4$ group in a polymer,

a residues of $Z_1$ and $Z_4$ exist, or $Z_4$ exists in a mixture with one of $Z_1$, $Z_2$ and $Z_3$;

b:

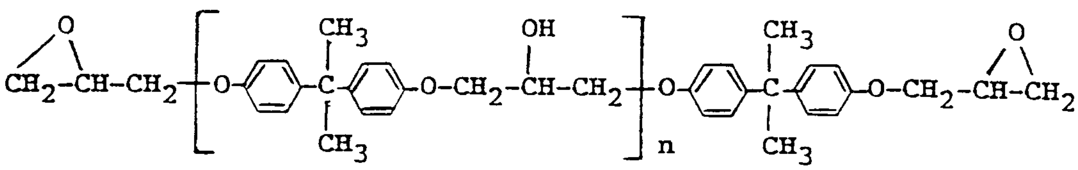

II

wherein n is an integer form 1 to 15,

wherein said epoxy polyether being based on bisphenol-A, and having at least two epoxy groups and at least one hydroxyl group in a polymer, the epoxy polyether being 250 to 1000 epoxy equivalent which is a ratio of a polymer weight to one mole epoxy group,

or

being a resin mixture of different epoxy resins having the same epoxy equivalent as the one mentioned above, and a weight of the component in the mixture of the reactive polymer (a) + (b) being selected so that at least one not more than two epoxy group exist to each dihydro-2,5-furanedione group in the reactive polymer (a).

**2.** A polymer mixture containing three reactive polymers, a hydroxyl-group-free organic solvent, and a catalyst;

wherein said three reactive polymers essentially consisting of the acrylate copolymer (a) recited in Claim 1 and a mixture of a epoxy polyether (b);

wherein the mixture (b) essentially consisting of epoxy polyether (b1) and a compound (b2);

wherein said epoxy polyether (b1) has at least two epoxy groups and at least one hydroxyl group in a polymer, the epoxy polyether being 250 to 4000 epoxy equivalent, and being made from the bisphenol-A represented by the formula (II);

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**3.** A polymer mixture containing two reactive polymers, a hydroxyl-group-free organic solvent, and a catalyst;

wherein said two reactive polymers essentially consisting of the acrylate copolymer (a) recited in Claim 1 and an acrylate copolymer (b) represented by following formula (III);

(b);

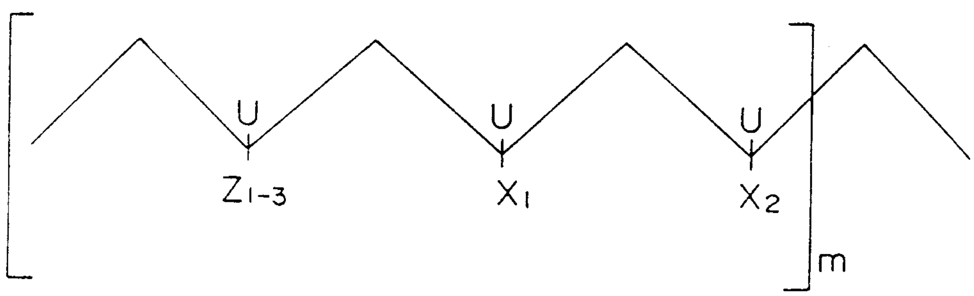

(III)

wherein

U, $Z_1$, $Z_2$, $Z_3$ and m are the same as U, $Z_1$, $Z_2$, $Z_3$ and m recited in Claim 1 respectively,

$X_1$ is a chemical group selected from a group consisting of $Z_1$, $Z_2$, $Z_3$ and $Z_5$,

$X_2$ is a chemical group selected from a group consisting of $Z_1$, $Z_2$, $Z_3$ and $Z_6$,

$Z_5$ is either of $-COO-(CH_2)_{1-4}-OH$ and $-COO-(CH_2-CH_2O)_{1-20}-CH_2-OH$,

$Z_6$ is $-COO-CH_2-CH-CH_2$

wherein said acrylate copolymer (b) has a main chain partially substituted by $-CH_2$ group,

wherein at least two $Z_5$ exists in the mixture having one of $Z_1$, $Z_2$ and $Z_3$, or at least two of $Z_5$ and $Z_6$ exist in the mixture having one of $Z_1$, $Z_2$ and $Z_3$ in a polymer,

a total amount of $Z_5$ and $Z_6$ is equal to or less than twice of the amount of the dihydro-2,5-furanedione in the polymer recited in Claim 1.

**4.** A polymer mixture containing three reactive polymers, a hydroxyl-group-free organic solvent, and a catalyst;

wherein said three reactive polymers essentially consisting of the acrylate copolymer (a) recited in Claim 1 and a mixture (b);

wherein the mixture (b) essentially consisting of an acrylate copolymer (b1) represented by following formula (IV) and a compound (b2);

(b1):

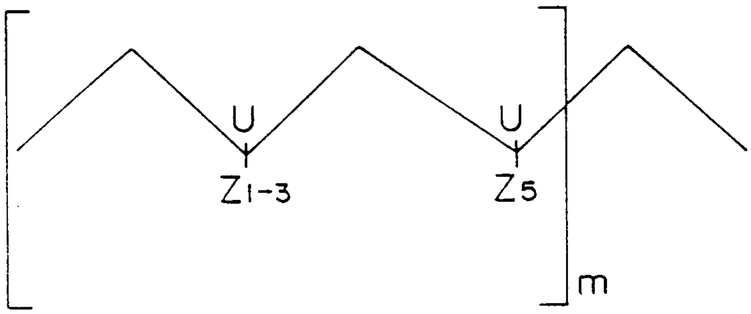

(IV)

wherein

U, $Z_1$, $Z_2$, $Z_3$ and $Z_5$ are the same as U, $Z_1$, $Z_2$, $Z_3$ and $Z_5$ recited in Claim 3,

m is an integer from 2 to 500,

wherein said acrylate copolymer (b1) have a main chain partially substituted by $-CH_2$ group,

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**5.** A polymer mixture containing three reactive polymers, a hydroxyl-group-free organic solvent, and a catalyst;

wherein said three reactive polymers essentially consisting of the acrylate copolymer (a) recited in Claim 1, at least one polymer (b1) represented by following formula (V) and an epoxy polymer;

(b1):

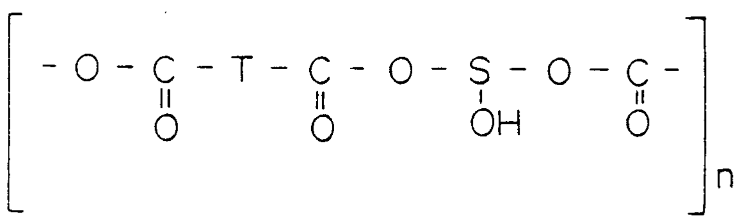

(V)

wherein

n is an integer from 2 to 100,

T is a chemical group selected from a group consisting of $-(CH_2)_{2\text{-}10}-$, $-(CH\text{-}CHR)_{1\text{-}5}$, $-CH=CR-$,

R is a chemical group selected from a group consisting of -H, alkyl group, ortho-substituted phenyl group, meta-substituted phenyl group and para-substituted phenyl group,

S is a chemical group selected from a group consisting of $-(CH_2)_{2\text{-}12}-$, $-(CH_2\text{-}CHR\text{-}O)_{1\text{-}20}-$, and $-CR_{4\text{-}m}(CH_2\text{-}CHR\text{-}O_{1\text{-}20}-$,

m is an integer from 1 to 4,

wherein said epoxy polymer has a straight or a blanched main chain, and at least two hydroxyl group exist in a polymer;

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**6.** A polymer mixture containing two reactive polymers, a hydroxyl-group-free organic solvent, and a catalyst;

wherein said two reactive polymers essentially consisting of the acrylate copolymer (a) recited in Claim 1 and a mixture of a polymer (b);

wherein the mixture (b) essentially consisting of a phenol-novolak polymer (b1) represented by following formula (VI) and a compound (b2);

(b1):

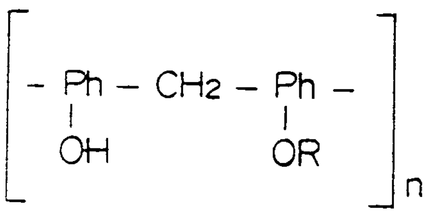

(VI)

wherein

Ph is a chemical group selected from a group consisting of an aromatic ring and substituted aromatic ring by a shoot-chain alkyl group,

OH is a phenolic OH-group,

OR is a phenolic ether group,

R is a chemical group having a branched or straight alkyl or alkylene rest with 1 to 12 C atoms,

n is an integer from 1 to 15,

and at least two OH-groups exist in the polymer,

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**7.** A polymer mixture containing two reactive polymers, a hydroxyl-group-free organic solvent, and a catalyst;

wherein said two reactive polymers essentially consisting of the acrylate copolymer (a) recited in Claim 1, and the phenol novolak copolymer (b) represented by following formula (VI) recited in Claim 6;

wherein at least one OH- group exists in a polymer, and at least two OR- group is substituted by a chemical group represented by following formula (VII);

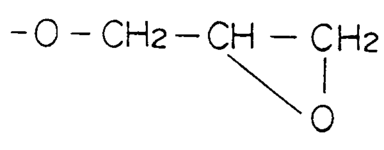

(VII)

wherein a total mole amount of epoxy group and OH- group is not more than twice of the mole amount of dihydro-2,5-furanedione recited in Claim 1.

**8.** A polymer mixture containing two reactive polymers, a hydroxyl-group-free organic solvent, a catalyst;

wherein said two reactive polymer essentially consisting of the acrylate copolymer (a) recited in Claim 1 and a mixture of a phenol-novolak copolymer (b1) represented by the formula (VI) recited in Claim 6 and a compound (b2);

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**9.** A polymer mixture containing a mixture of a reactive polymer and reactive low molecular compound, a hydroxyl-group-free organic solvent, and a catalyst;

wherein said reactive polymer is the acrylate copolymer (a) recited in Claim 1;

wherein said low molecular compound essentially consisting of a compound (b1) and a compound (b2);

wherein said compound (b1) is one or more low molecular mono-, di-, tri-, or polyols which can contain additionally ether, ester, amino amido, carbonate or carbamate;

wherein said compound (b2) is one or more low molecular compound selected from a group consisting of aromatic monoepoxide, aromatic diepoxide, aromatic triepoxide, aromatic polyepoxide, aliphatic monoepoxide, aliphatic diepoxide, aliphatic triepoxide, aliphatic polyepoxide, cycloaliphatic monoepoxide, cycloaliphatic diepoxide, cycloaliphatic triepoxide and cycloaliphatic polyepoxide, and a total mole amount of epoxy group is equal to or not more than twice of a mole amount of dihydro-2,5-furanedione in the polymer (a) recited in Claim 1.

**10.** A polymer mixture recited in Claim 1 to Claim 9, wherein a total solid content of reactive polymers is from 10 to 70 % by weight, and the content of the solvent is from 30 to 90 5 by weight.

**11.** A polymer mixture recited in Claim 1 to 10, wherein a content of the catalyst is from 0.1 to 2.5 % by weight of the content of the reactive polymers.

**12.** A process for manufacturing a reactive polymer component (i) recited in Claim 1, the process including a step of:

coplymerizing 3-methylene-butanediacid-1,4 with a compound selected from the group consisting of acrylic diene monomers, methacrylic diene monomers and vinyl diene monomers, in the presence of low aliphatic carbonic anhydrides, the copolymerization being performed in either of a solvent and a solvent mixture, the solvent or the solvent mixture having a boiling temperature between 100 and 200 °C, the copolymerization being performed at a temperature between 100 and 200 °C with an aid of radical-forming initiators;

wherein furanedione-rings are formed during the copolymerization or while volatile acids are removed by distillation after the copolymerization, under existence of optional acetic or basic catalysts.

**13.** A process for manufacturing a reactive polymer component (i) recited in Claim 1, the process including a step of:

coplymerizing 3-methylene-butanediacid-1,4 with a compound selected from the group consisting of acrylic diene monomers, methacrylic diene monomers and vinyl diene monomers, in the presence of alcohol having 1 to 4 C-atoms and an acid catalyst, the copolymerization being performed in either of a solvent and a solvent mixture, the solvent or the solvent mixture having a boiling temperature above 100 °C, the copolymerization being performed at a temperature above 100 °C with an aid of radical-forming initiators;

wherein furanedione-rings are formed during the copolymerization or while the alcohol are removed and spilt-off after the copolymerization.

**14.** A process for manufacturing a reactive polymer component (i) recited in Claim 1, the process including a step of:

coplymerizing $\beta$-hemiesters of 3-methylene-butanediacid-1,4 with an alcohol with 1 to 4 C-atoms and a compound selected from the group consisting of acrylic diene monomers, meth-acrylic diene monomers and vinyl diene monomers, in the presence of low aliphatic carbonic anhydrides, the copolymerization being performed in either of a solvent and a solvent mixture, the solvent or the solvent mixture having a boiling temperature above 100 °C, the copolymerization being performed at a temperature above 100 °C;

wherein furanedione-rings are formed during the copolymerization or while alcohols are removed or spilt-off by distillation after the copolymerization, under existence of optional acetic or basic catalysts.

**15.** A method of using the polymer mixture recited in Claim 1 to Claim 10 as a material for coating.

**16.** A method of using the polymer mixture recited in Claim 1 to Claim 10 as a material for powder-coating.

European Patent Office

# EUROPEAN SEARCH REPORT

Application Number

**EP 91 11 1427**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 358 306 (DU PONT)<br>* page 3, line 7 - line 16 * * page 3, line 28 - line 50; claims 1-5; examples 1,2,4 * | 1-5 | C 08 F 222/04<br>C 09 D 135/00<br>C 08 L 35/00 |
| A | EP-A-0 351 966 (DU PONT)<br>* page 3, line 29 - line 44; claims 1-6; examples * | 1-5 | |
| A | GB-A-2 137 637 (INTERNATIONAL PAINT)1984<br>* page 1, column 1, line 30 - line 45; claims 1-7; examples * | 1,12 | |
| A | EP-A-0 353 734 (NIPPON PAINT)<br>* page 2, line 20 - line 42; claims 1-5; examples * | 1-5 | |
| A,D | EP-A-0 225 097 (DU PONT)<br>* page 3, line 20 - line 26 * * page 4, line 27 - page 5, line 20; claims 1-8; examples * | 1-5 | |
| | | | TECHNICAL FIELDS SEARCHED (Int. Cl.5) |
| | | | C 08 F<br>C 09 D<br>C 09 K |

The present search report has been drawn up for all claims

| Place of search | Date of completion of search | Examiner |
|---|---|---|
| The Hague | 03 October 91 | ENGEL H.S.L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document